# EUROPÄISCHE PATENTANMELDUNG

(11) **EP 1 579 942 A1**
(43) Veröffentlichungstag der Anmeldung: **28.09.2005**
(21) Anmeldenummer: 04007339.7
(22) Anmeldetag: 26.03.2004
(51) Int. Cl.: B23K 1/008, B23K 3/08, B23K 1/00, F28F 1/12

(54) **Verfahren zur Herstellung eines Wärmetauschers**

(71) Anmelder: Balcke-Dürr GmbH, 46049 Oberhausen (DE)
(72) Erfinder: Podhorsky, Miroslav, 40882 Ratingen (DE); Schrey, Hans-Georg, Dipl.-Ing., 40878 Ratingen (DE); Schug, Wofgang, Dipl.-Ing., 40878 Ratingen (DE); Holten, Wolfgang, Dipl.-Ing., 40629 Düsseldorf (DE)
(74) Vertreter: Lang, Friedrich

(57) **Zusammenfassung**

Zusammengefasst bringt das erfindungsgemäße Verfahren und die Vorrichtung zur Durchführung desselben Wärmetauscher mit deutlich verbesserter mechanischer Festigkeit bei gleichzeitiger Materialeinsparung und vereinfachter Verfahrensführung hervor. Dabei ermöglichen die Abdeckplatten (7,8), dass das zu verbindende Gesamtpaket (1) durch äußeres Verspannen gebildet und gehalten werden kann, wobei die Rippen (5,6) auf einfache Weise auf den Rohroberflächen und die Abdeckungen (7,8) auf den Rippenkanten fixiert und die Bauteile in einem einzigen Verfahrensschritt miteinander verlötet werden können. Durch die Verspannung werden die Bauteile in einem ihrem Einsatz angepassten Spannungszustand gebracht, wodurch die erfindungsgemäß hergestellten Wärmetauscher besonders langlebig sind. Ferner werden durch die erfindungsgemäße Anordnung der Lehrgerüste besonders lange Wärmetauscher in hoher Qualität hergestellt.

## Beschreibung

Die Erfindung betrifft ein Verfahren und eine Vorrichtung zur Herstellung eines Wärmetauschers gemäß dem Oberbegriff des Anspruchs 1.

Üblicherweise besteht ein Wärmetauscher aus einem Rohr, dessen äußere Oberfläche zumindest teilweise mit Kühlrippen versehen ist. Diese bekannten Wärmetauscher sind umfangreich im Einsatz und besonders häufig werden sie als luftgekühlte Kondensatoren in Kraftwerken oder als Industriekühler in der Chemie- und der Lebensmittelindustrie eingesetzt.

Wärmetauscher führen in verschiedenen Prozessen Energie ab oder zu. Dabei durchströmt das z.B. zu kühlende Medium das Rohr, wobei die Kühlrippen von Kühlluft, Kühlgas oder dergleichen umströmt werden und so die vom Medium an das Rohr abgegebene Wärme ableiten. Die Wärmetauscher werden aus gut wärmeleitenden Materialien, wie zum Beispiel Stahl, Kupfer oder anderen entsprechend geeigneten Metallen, Keramiken und Kunststoffen ausgeführt. Bei den in der Kraftwerkstechnik häufig vorkommenden Wärmetauschern sind die Rohre abgeflachte Stahlrohre, deren äußere Oberfläche mit Aluminium beschichtet ist und auf der Kühlrippen aus Aluminium angeordnet sind.

Diese bekannten Wärmetauscher werden üblicherweise in mehreren Verfahrensschritten hergestellt. So werden zunächst die Rippen durch ziehharmonikaartiges Abfalten flacher Bleche gebildet. Dazu wird das Flachblech z.B. zwischen zwei sich gegenläufig drehenden Walzen hindurch geführt. Die gegenläufig drehenden Walzen haben jeweils ineinander greifende zahnradartig ausgebildete Querschnitte, die das zwischen den beiden Walzen durchlaufende Blech auf ganzer Breite durchgehend in eine zickzack- oder wellenförmige. Form pressen. Die so ziehharmonikaartig gefalteten Rippenbleche werden dann auf eine abgeflachten Oberfläche des Wärmetauscherrohres aufgelegt und mit diesen fest verlötet oder verklebt, dann wird das Rohr gedreht und das zweite Rippenblech entsprechend aufgebracht.

Da die Wärmetauscherrohre unter Über- oder Unterdruck stehen und zudem beträchtlichen thermischen Belastungen ausgesetzt sind, neigen die abgeflachten Rohre dazu, sich zu verformen und damit den mechanischen Verbund zwischen Rippen und Rohroberfläche zu beeinträchtigen.

Bei diesen weit verbreiteten Wärmetauschern sind die Herstellungsverfahren wie oben beschrieben sehr aufwendig. Zudem müssen die abgekanteten Rippenbleche auf den Rohroberflächen zur Herstellung einer guten Befestigung sehr genau gehalten werden, während die vom Rohr abstehenden freien Kanten der Rippenbleche sehr empfindlich sind.

Es hat daher bereits vielfach Versuche gegeben, insbesondere die Rippenbleche zu versteifen. Dazu wurden bereits Wärmetauscher vorgeschlagen, bei denen die Rippenbleche mit Abdeckplatten verlötet wurden. Allerdings hat sich bei der Herstellung dieser Wärmetauscher mit abgedeckten Rippen gezeigt, dass es regelmäßig zu Spannungen und thermischen Problemen bei der Herstellung gekommen ist. Um diese Probleme zu lösen wird in der FR 1479551 vorgeschlagen, gänzlich auf ein Verlöten der Rippen- und Abdeckbleche zu verzichten und statt dessen, die Rippenbleche auf das Rohr zu kleben und dann die Abdeckbleche auf die Rippen zu kleben. Dies würde die bekannten thermischen Probleme bei der Herstellung der Wärmetauscher wegfallen lassen.

In der Praxis hat sich jedoch gezeigt, dass das Verkleben der Rippenbleche mit dem Rohr und das anschließende Verkleben der Abdeckplatte mit den Rippenblechen viel zu aufwendig und teuer ist. Auch war die Zuverlässigkeit und Haltbarkeit der Klebstellen nicht immer vollständig zufriedenstellend. Aus diesem Grund hat sich insbesondere bei Kraftwerkswärmetauschern, die sehr große Abmessungen aufweisen, der Typ des mit Abdeckplatten abgedeckten verrippten Wärmetauschers nicht durchgesetzt.

Der Erfindung liegt daher die **Aufgabe** zugrunde, ein Verfahren bzw. eine Vorrichtung zur Herstellung eines Wärmetauschers mit abgedeckten Rippen anzugeben, bei dem der Wärmetauscher auf günstige und technisch zuverlässige Art und Weise hergestellt wird.

Diese Aufgabe wird durch das Verfahren gemäß Anspruch 1 und den Vorrichtungen gemäß der Ansprüche 5 und 6 gelöst. Vorteilhafte Weiterbildungen sind in den Unteransprüchen beschrieben.

Erfindungsgemäß erfolgt das Verfahren zur Herstellung eines Wärmetauschers, bei dem als Hauptbauteile ein abgeflachtes Wärmetauscherrohr, zwei Rippenbleche und zwei Abdeckbleche miteinander verlötet werden, in drei einzelnen Verfahrensschritten.

Im ersten Verfahrensschritt werden die Hauptbauteile lose in ein Lehrgerüst mit Anschlägen in der Reihenfolge erstes Abdeckblech, erstes Rippenblech, Wärmetauscherrohr, zweites Rippenblech, zweites Abdeckblech eingelegt, dabei gegeneinander geschichtet und an Anschlägen des Lehrgerüstes in ihrer Einbauposition ausgerichtet, wobei eine mit einem Hartlot plattierte Oberfläche eines Bauteils mit einem Flussmittel beaufschlagt wird, wenn ein weiteres Bauteil gegen diese Oberfläche geschichtet wird.

Im zweiten Verfahrensschritt werden die Hauptbauteile mit dem Lehrgerüst und einer, vorzugsweise aus einzelnen Profilen bestehenden, Kontervorrichtung gegeneinander und mit einer einstellbaren Spannkraft zu einem sich selbst tragenden Paket verspannt, wobei die Spannkraft so eingestellt wird, dass die zu verlötenden Bauteile bei einem Transport in ihrer Lage fixiert sind und zugleich zwei miteinander zu verlötende Bauteile mit unterschiedlichen Wärmeausdehneigenschaften sich bis zu einer maximalen Löttemperatur in Querrichtung nicht unterschiedlich zueinander ausdehnen können.

Im dritten Verfahrensschritt passiert das selbsttragende Paket den Löttunnel in Längsrichtung, wobei die aneinander liegenden Hauptbauteile zunächst vorgewärmt, dann auf Löttemperatur erhitzt und gleichzeitig miteinander an ihren Kontaktstellen mit der geschmolzenen Hartlotplattierung so verlötet werden, dass sich insbesondere entlang der Rippen durchgehende Lotnähte ausbilden.

Das erfindungsgemäße Verfahren hat den Vorteil, dass die Hauptbauteile zunächst in einem Lehrgerüst einfach, schnell und präzise auf stets gleiche Weise in ihre Einbauposition gebracht werden können. Dabei sind die Anschläge in dem Lehrgerüst so angeordnet, dass jedes einzelne Hauptbauteil, wenn es in das Lehrgerüst eingelegt wird, genau dann in seiner vorgesehenen Einbauposition justiert ist, wenn es direkt an den Anschlägen anliegt. Dazu sind wenigstens zwei orthogonal zueinander ausgerichtete Anschlagebenen im Lehrgerüst definiert. Die erste Anschlagebene verläuft vorzugsweise horizontal und die zweite Anschlagebene vertikal. Gibt es z.B. seitliche Überstände am Wärmetauscher werden im Lehrgerüst weitere Anschlagebenen vorgesehen, die den Überständen entsprechend parallel zur Ausgangsebene verschoben sind. Damit die Anschläge bei der Beschickung des Lehrgerüstes nicht ihre Lage verändern, soll sich das Lehrgerüst nicht wesentlich verformen. Es ist daher üblicherweise ein aus Stahlprofilen bestehendes versteiftes und sich selbst tragendes Gerüst.

Die lose Schichtung der Hauptbauteile in der Reihenfolge des ersten Verfahrensschrittes hat den Vorteil, dass der Wärmetauscher in seiner späteren geometrischen Ausgestaltung gebildet wird. So ist leicht zu erkennen, ob die Hauptbauteile ihre korrekte Position haben und können gegebenenfalls in ihrer Einbaulage leicht nachjustiert werden. Diese Schichtung erfordert einen Lötprozess, der es ermöglicht auch an den unzugänglichen Kontaktstellen haltbare Lötnähte zu erstellen. Das entsprechend geeignete Lötverfahren erhitzt die Bauteile nicht lokal direkt an den Lötstellen sondern global als Ganzes in einem Löttunnel. Diese Löttechnik ermöglicht zugleich eine besonders effiziente Herstellung, da alle Lötnähte zwischen den erhitzten Hauptbauteilen gleichzeitig entstehen und auch beim Abkühlen auf die Umgebungstemperatur außerhalb des Lötofens gleichzeitig erstarren.

Vorzugsweise wird das Lot in Form einer Plattierung wenigstens eines von zwei miteinander zu verlötenden Hauptbauteilen zumindest an den Kontaktstellen der beiden Bauteile vorgesehen. Normalerweise handelt es sich um ein Hartlot aus einer Aluminiumlegierung (Al-Si), die einen niedrigeren Schmelzpunkt als die aus Aluminium oder Stahl bestehenden Hauptbauteile hat. Werden die Bauteile bzw. der betreffende Teil des Wärmetauschers als Ganzes auf die Schmelzpunkttemperatur des Lotes erhitzt, schmilzt nur die Plattierung und verbindet metallurgisch die anliegenden Bauteile an ihren Kontaktstellen.

Um die Oberflächen der aneinander zu fügenden Hauptbauteile von ihrer natürlichen Oxidschicht zu befreien und frei zu halten, wird wenigstens eine vorzugsweise beide Oberflächen der miteinander zu verbindenden Hauptbauteils mit einem Flussmittel bestrichen, bestäubt, besprüht oder mittels elektrostatischer Aufladung damit versehen. Dies erfolgt zweckmäßig bevor die Hauptbauteile gegeneinander gelegt werden. Ein besonders gut zu verwendendes Flussmittel ist ein nichthygroskopisches und nichtkorrosives Kaliumfluoroaluminat, das unter dem Namen Nocolok-Flux® gehandelt wird.

Die im zweiten Verfahrensschritt vorgenommene Verspannung der Hauptbauteile erfolgt mit Hilfe einer Kontervorrichtung, die auf beziehungsweise gegen die Hauptbauteile gelegt wird. Im einfachsten Fall handelt es sich dabei um einfache Profile, wie z.B. rechteckige Hohlprofilrohre oder Doppel-T-Träger, die in Querrichtung des Wärmetauschers von einander beabstandet und im Wesentlichen parallel zur Längsseite des Wärmetauschers bzw. zu Längsträgern des Lehrgerüstes angeordnet werden. Es können aber auch Platten oder gerüst- oder gitterartige Strukturen verwendet werden.

Die Kontervorrichtung wird dann mittels geeigneter Spannmittel gegen die Hauptbauteile gepresst. Üblicherweise werden als Spannmittel Klappschrauben verwendet, deren Spannkraft durch Anziehen der Schrauben eingestellt wird. Denkbar sind auch Zwingen, die den im Lehrgerüst befindlichen Wärmetauscher außen umfassen und von der einen Abdeckplatten-Seite zur anderen Abdeckplatten-Seite eine Spannung aufbringen. Im Wesentlichen soll die Spannkraft möglichst gleichmäßig verteilt auf die Abdeckplatten aufgebracht werden. Von besonderer Wichtigkeit ist auch, dass die äußeren Ränder des Wärmetauschers gut verspannt werden, damit an diesen im späteren Einsatz des Wärmetauschers besonders belasteten Bereichen zuverlässige Lötnähte mit großer Haltekraft ausgebildet werden.

Die aufzubringende Spannkraft wird in Abhängigkeit der Werkstoffe und Abmessungen der Hauptbauteile gewählt. So sind insbesondere die Rippenbleche sehr dünn und können bei zu großer Verpressung ausbeulen und sich leicht verformen. Auf der anderen Seite kommt es zwischen den Hauptbauteilen gegebenenfalls zu unterschiedlichen Temperaturdehnungen aufgrund sich unterschiedlich ausdehnender Werkstoffe. Dies ist z.B. insbesondere dann ein Problem, wenn, wie hier vorgesehen, ein mit Aluminium beschichtetes Stahlwärmetauscherrohr mit Aluminiumrippen verlötet wird. So hat Aluminium eine um rund 47,5% größere thermische Ausdehnung als Stahl. Die Spannkraft wird daher so aufgebracht, dass sich die unterschiedlichen Temperaturdehnungen nicht oder nur zu einem bestimmten Maß einstellen können.

Die Verspannung wird dabei auch dazu genutzt, den Spannungszustand des fertigen Wärmetauschers zu beeinflussen. So ist es möglich, den Wärmetauscher bereits bei seiner Herstellung derart im Lehrgerüst zu verspannen, dass sich Verformungen entlang der Lötnaht z.B. nur bis zu einem gewählten Maß einstellen können. Wird der so verlötete Wärmetauscher dann abgekühlt, stellen sich wieder Spannungen in den Lötnähten ein. Diese Spannungen werden dann durch die Erwärmung des Wärmetauschers im Gebrauch wieder neutralisiert. Der Wärmetauscher ist dann an seinen Lötstellen unter den bei seinem Einsatz herrschenden Temperaturbedingungen im Wesentlichen spannungsfrei. Durch die Verspannung werden also die Bauteile des Wärmetauschers so miteinander verbunden, dass der fertig hergestellte Wärmetauscher im Gebrauch einen seiner Nutzung angepassten Spannungszustand hat. Die erfindungsgemäß hergestellten Wärmetauscher sind daher besonders langlebig.

Die gegeneinander geschichteten und insbesondere mit dem Lehrgerüst verspannten Hauptbauteile ergeben ein selbst tragendes paketförmiges Gebilde. Die große Steifigkeit des Lehrgerüstes wird also dazu verwendet, die nur aneinander gelegten Hauptbauteile einfach am Rahmen verspannt zu stabilisieren und dann transportieren zu können. Dies ist insbesondere dann von Vorteil, wenn die Hauptbauteile zu einem Löttunnel gebracht werden müssen. Dann dient das Lehrgerüst auch als Transport-Aussteifungs- und Befestigungsvorrichtung.

Der Transport und die Handhabung der noch nicht verlöteten Wärmetauscher wird dadurch wesentlich erleichtert. Das gesamte Paket aus Hauptbauteilen und Lehrgerüst wird z.B. über Rollen, die unter dem Lehrgerüst angebracht sind, oder über Rollentische oder Rollenböden zum Löttunnel verschoben. Denkbar sind aber auch Förderbänder oder Schienen, auf denen das Lehrgerüst mit den Hauptbauteilen zusammen zum Löttunnel verschoben bzw. gezogen werden kann. Aufgrund der selbsttragenden Eigenschaft des derart gebildeten Paketes kann man auch den vormontierten und im Lehrgerüst verspannten Wärmetauscher zum Beispiel mit einem Kran am Lehrgerüst anheben, da die Hauptbauteile nicht mehr verrutschen können. Die Verspannung der Hauptbauteile im Lehrgerüst erhöht also auch die räumliche Flexibilität während der Produktion.

Weil im dritten Verfahrensschritt das gesamte selbsttragende Paket den Löttunnel durchfährt, werden die Hauptbauteile in jeder Querschnittsebene gleichzeitig miteinander verlötet. Dies hat den großen Vorteil, dass gleichzeitig alle Bauteile zumindest des betroffenen Querschnittes in ihrer Lage fixiert werden. Dabei schmelzen lediglich die Lotplattierungen und bilden durchgehende Lötnähte entlang der gesamten Rippenlänge. Dies geschieht auch in den von außen unzugänglichen weil abgedeckten Kontaktbereichen der Rippen zum Wärmetauscherrohr hin. Es findet also ein gleichzeitiges Verlöten des Wärmetauschers von innen und außen statt.

Dabei werden auch die freien, vom Rohr wegweisenden Kanten der Rippen auf einfache und wirtschaftliche Weise mit Abdeckungen versehen, die fest mit den Rippenkanten verbunden sind. Diese Abdeckung der Rippenbleche durch die Abdeckbleche erhöht die mechanische Stabilität des gesamten Rohr-Rippen-Verbundes derart, dass die Rippen aus entscheidend dünneren Blechen als beim Stand der Technik hergestellt werden können. Gegenüber nicht mit einem Abdeckblech abgedeckten Aluminiumrippen können sogar trotz der Verwendung der Abdeckbleche aus Aluminium Einsparungen bis in die Bereiche von 40 % Aluminium bei gleicher Bauform und verbessertem Wirkungsgrad des Wärmetauschers erzielt werden. Der verbesserte Wirkungsgrad des Wärmetauschers ergibt sich aus der vergrößerten Oberfläche, die mit den Abdeckungen einhergeht. Bei Verwendung von Stahl oder anderen Materialien für die Rippen und Abdeckbleche können ähnliche Einsparungen erzielt werden.

Üblicherweise werden für die Abdeckungen Bleche verwendet, welche streifenförmig Teile der Rippen, die gesamte Rippenkantenoberfläche oder jeweils gewünschte Einzelbereiche der Rippenkanten abdecken. Das Material der Abdeckbleche wird vorteilhaft so gewählt, dass sich dieses mit den Rippen in Abhängigkeit von deren Materialausbildung auf einfache Weise dauerhaft verbinden lassen. Geeignete Aluminiumlegierungen sind die gemäß der AA-Klassifikation der Aluminium Association bezeichneten AA-3003 oder die AA-3005 Legierung. Für die aufgewalzten Hartlot-Plattierungen werden gewöhnlich AA-4343, AA-4045 oder AA-4047 Legierungen gewählt. Auch können die Abdeckungen ihrerseits Ausnehmungen aufweisen, zum Beispiel gelocht sein oder sonstige bedarfsgerechte Ausnehmungen für Durchdringungen aufweisen. Aufgrund der abgedeckten Rippen ergibt sich bei Zuführung von Kühlluft eine Zwangsluftführung, durch die sogenannte Falschluft vermieden wird.

Der Rippenwirkungsgrad eines erfindungsgemäß hergestellten Wärmetauschers liegt dann z.B. in üblichen Bereichen von 75 bis 82 %, wobei aber zwischen 15 bis 37 % des Materials eingespart werden. Konkret genügt es bereits, Rippen aus Blechen zwischen 0,15 bis 0,30 mm dickem Aluminiumblech zu verwenden und dennoch eine erhöhte mechanische Stabilität des Wärmetauschers hervorzubringen.

Ferner lassen sich solche Wärmetauscher auf einfache Weise zu Wärmetauscherpaketen verbinden. Dabei ist es von Vorteil, wenn die Abdeckplatten der miteinander zu verbindenden Wärmetauscher elastisch verbunden werden. Dies kann zum Beispiel durch Verknipsen oder Verkleben mit einem nachgiebigen temperaturbeständigen Klebstoff erfolgen. Die elastische Verbindung hat den Vorteil, dass das Wärmetauscherpaket nicht durch thermische Unterschiede der verschiedenen Wärmetauscher im Paket durch Spannungen belastet wird. So können sich einzelne Wärmetauscher mit unterschiedlicher Temperatur freier im Gesamtpaket ausdehnen. Das heißt mit anderen Worten, dass in einem aus mehreren Wärmetauschern gebildeten Gesamtpaket gegebenenfalls unterschiedlich ausgedehnte einzelne Wärmetauscher vorhanden sind, ohne dass dadurch ihre Verbindung miteinander beschädigt wird. Dadurch wird die mechanische Dauerstandfestigkeit erheblich erhöht.

Zusammengefasst bringt das erfindungsgemäße Verfahren also Wärmetauscher mit deutlich verbesserter mechanischer Festigkeit bei gleichzeitiger Materialeinsparung und vereinfachter Verfahrensführung hervor. Dabei ermöglichen erst die Abdeckplatten, dass das zu verbindende Gesamtpaket durch äußeres Verspannen gebildet und gehalten werden kann, wobei die Rippen auf einfache Weise auf den Rohroberflächen und die Abdeckungen auf den Rippenkanten fixiert und die Bauteile dauerhaft miteinander verbunden werden können.

Vorteilhaft werden die Hauptbauteile in horizontaler Lage aufeinander geschichtet. Die Hauptbauteile befinden sich in horizontaler Lage, wenn sie sich in ihrer flächigen Ausdehnung parallel zum Horizont erstrecken, also sowohl die Stirnseite wie auch die Längsseite parallel zur Waagerechten verlaufen. Dies ermöglicht ein einfach durchzuführendes Stapeln der Hauptbauteile im Lehrgerüst. Nach dem Schichten der Hauptbauteile wird dann einfach die Kontervorrichtung auf die zweite Abdeckplatte gelegt und mit dem unter den Hauptbauteilen befindlichen Lehrgerüst nach unten verspannt.

In einer anderen vorteilhaften Ausführungsform werden die Hauptbauteile in einer in einem spitzen Winkel zur Vertikalen ausgerichteten Lage aneinander geschichtet. Dazu erstrecken sich die Hauptbauteile in ihrer flächige Ausdehnung gegenüber der Senkrechten geneigt. Unter einem spitzen Winkel sind dabei Winkel von 0° bis 45° zu verstehen. Es ist zweckmäßig die Ausrichtung so vorzunehmen, dass die Stirnseiten der Bauteile gegenüber der Vertikalen angewinkelt und die Längsseiten parallel zur Horizontalen ausgerichtet sind.

Die Aneinanderschichtung der Bauteile in vertikaler oder nahezu vertikaler Lage ist besonders platzsparend. Auf gleicher Grundfläche können so mehrere Wärmetauscherpakete gleichzeitig montiert bzw. gelagert werden. Gegebenenfalls können sogar mehrere Pakete nebeneinander den Löttunnel durchlaufen. Diese Ausrichtung der Bauteile hat also eine besonders gute Raumausnutzung zur Folge. Die Verspannung der Hauptbauteile erfolgt dann in zumindest nahezu horizontaler Richtung, jedenfalls rechtwinklig zur Ausrichtung der Bauteile, entweder an einem nach oben stehenden Teil des Lehrgerüstes oder mit Hilfe zweier gegenüberliegend angeordneter Kontervorrichtungen. Die nur nahezu vertikale Ausrichtung der Bauteile vereinfacht das Stapeln, weil die Bauteile beim Schichten gegeneinander gelegt werden können, ohne dass sie leicht umkippen.

In einer besonders bevorzugten Ausführungsform werden die Hauptbauteile beim Verlöten in einer Stickstoffgasatmosphäre bis auf 605 °C aufgeheizt, wobei das Flussmittel zwischen 565°C und 570 °C schmilzt und sich Lotnähte bei 577 °C bis 605 °C an den Kontaktstellen anliegender Hauptbauteile bilden. Die Stickstoffgasatmospäre dient dabei als Schutzgas um eine unerwünschte Oxidation im Bereich der Lotnähte und ein Eindringen von Verunreinigungen zu verhindern.

Zur Herstellung langer Wärmetauscher sind in einer Vorrichtung zur Durchführung des erfindungsgemäßen Verfahrens zwei oder mehr Lehrgerüste in Längsrichtung hintereinander und überlappend unter dem Wärmetauscher angeordnet, wobei die Überlappung der Lehrgerüste so eingestellt ist, dass sie wenigstens einem sich beim Verlöten in Längsrichtung einstellenden Temperaturdehnungsunterschied zwischen den Lehrgerüsten und der Abdeckplatte entspricht. Insbesondere Wärmetauscher für Industrie- oder Kraftwerksanlagen können Längen im Bereich von 10 m bis 12 m aufweisen. Durch die Erwärmung beim Löten dehnen sich die Wärmetauscher insbesondere in ihrer Längsrichtung spürbar aus. Da die aus Abdeckplatten wie bereits geschildert üblicherweise aus Aluminium und die Lehrgerüste aus Stahl sind, kommt es zu Dehnungsunterschieden zwischen diesen Teilen. Die Aluminiumplatte dehnt sich stärker als das Stahlgerüst aus. Um diesen Effekt auszugleichen werden die Gerüste insbesondere in Längsrichtung in einander verschoben, also überlappend, angeordnet. So wird die Abdeckplatte auch im erhitzten Zustand noch durchgängig vom Lehrgerüst gehalten, wenn die Länge der Überlappung dem Längenunterschied entspricht.

In einer weiteren vorteilhaften Ausführungsform sind in einer Vorrichtung zur Durchführung des erfindungsgemäßen Verfahrens in Analogie zu den Lehrgerüsten auch zwei oder mehr Kontervorrichtungen in Längsrichtung hintereinander und überlappend am Wärmetauscher angeordnet. Dabei ist auch hier die Überlappung der Kontervorrichtungen so eingestellt, dass sie wenigstens einem sich beim Verlöten in Längsrichtung einstellenden Temperaturdehnungsunterschied zwischen den Kontervorrichtungen und der Abdeckplatte entspricht.

Zudem ist es vorteilhaft, dass bei der Vorrichtung das Lehrgerüst wenigstens eine Lastverteilungsplatte aufweist, die zwischen den Profilen des Lehrgerüstes und der Abdeckplatte des Wärmetauschers zur Verteilung der Spannkraft angeordnet ist. So wird die aus den Profilen kommende punktuell konzentrierte Kraft flächig auf die Abdeckplatte aufgebracht und die Spannkraft besonders flächig über die gesamte Breite des Wärmetauschers verteilt.

Entsprechend bevorzugt weist auch die Kontervorrichtung wenigstens eine Lastverteilungsplatte auf, die zwischen den Profilen der Kontervorrichtung und der Abdeckplatte des Wärmetauschers zur Verteilung der Spannkraft angeordnet ist. Dies erzeugt dieselbe vorteilhafte flächige Spannkrafteinleitung wie bei beim Lehrgerüst.

Weiterbildend weist die Kontervorrichtung zur Einspannung der Wärmetauscherbauteile ein massives U-Profil auf, dessen Gewicht der Einspannung dient, wobei vorzugsweise zwischen den abstehenden Schenkel wenigstens ein, ebenfalls der Einspannung dienendes, Zusatzgewicht angeordnet ist. Bei dieser Weiterbildung wird also das U-Profil als Kontervorrichtung zusammen mit dem Zusatzgewicht verwendet. Dazu wird das U-Profil flächig auf das zuletzt eingelegte Abdeckblech und dann auf das U-Profil da Zusatzgewicht gelegt. Es stehen also bei horizontaler Anordneung die Schenkel des U-Profils und das Zusatzgewicht nach oben. Aus den Schenkeln und dem Zusatzgewicht ergibt sich eine erhöhte Spannkraft an den Rändern des Profils und der Position des Zusatzgewichtes. Daher ist es vorteilhaft, wenn die Schenkel über den seitlichen Rändern der Abdeckplatte angeordnet und das Zusatzgewicht in der Profilmitte werden. So ergibt sich an den unter den Löttemperaturen sich stark verformen Rändern der Abdeckplatte und eine stärkere Einspannungswirkung. Dies verbessert die Qualität der Lötverbindungen an diesen Stellen. Eine derartige Kontervorrichtung verschleißt bei mehrfacher Anwendung nicht so stark wie die losen Profile die sich mit zunehmender Benutzung verbiegen und spart auch aufgrund der einfacheren Handhabung Kosten.

Die Querschnittsform des U-Profils, also dessen Gewichtsverteilung, und die Wahl der Größe und der Position des wenigstens einen Zusatzgewichtes ergibt sich aus einer Verformungsermittlung für die Wärmetauscherbauteile. So wird der Querschnitt, insbesondere.die Dicken der das U-Profil bildenden Wände und die Längen der abliegenden Schenkel so gewählt, dass die Wärmetauscherbauteile in ihrer Einbauposition fixiert und gegeneinander gepreßt werden, wenn das U-Profil und das wenigstens eine Zusatzgewicht aufgelegt sind und sich im Löttunnel befinden.

Nachfolgend wird die Erfindung anhand eines in der Zeichnung dargestellten Ausführungsbeispiels weiter erläutert. Es zeigen schematisch:
- Fig. 1: Eine perspektivische Ansicht eines erfindungsgemäß hergestellten Wärmetauschers;
- Fig. 2: einen Querschnitt durch einen Wärmetauscher, der in einem ersten Ausführungsbeispiel eines Lehrgerüstes angeordnet ist;
- Fig. 3: eine Draufsicht auf zwei in Längsrichtung überlappend angeordnete Lehrgerüste eines zweiten Ausführungsbeispiels;
- Fig. 4: einen Querschnitt durch einen Wärmetauscher, der in dem ersten Ausführungsbeispiel des Lehrgerüstes der Fig. 2 angeordnet ist und auf den ein Ausführungsbeispiel einer zweiten Kontervorrichtung aufgelegt ist;
- Fig. 5: einen Querschnitt durch ein Lehrgerüst gemäß einer dritten Ausführungsform mit aufgelegter Kontervorrichtung.

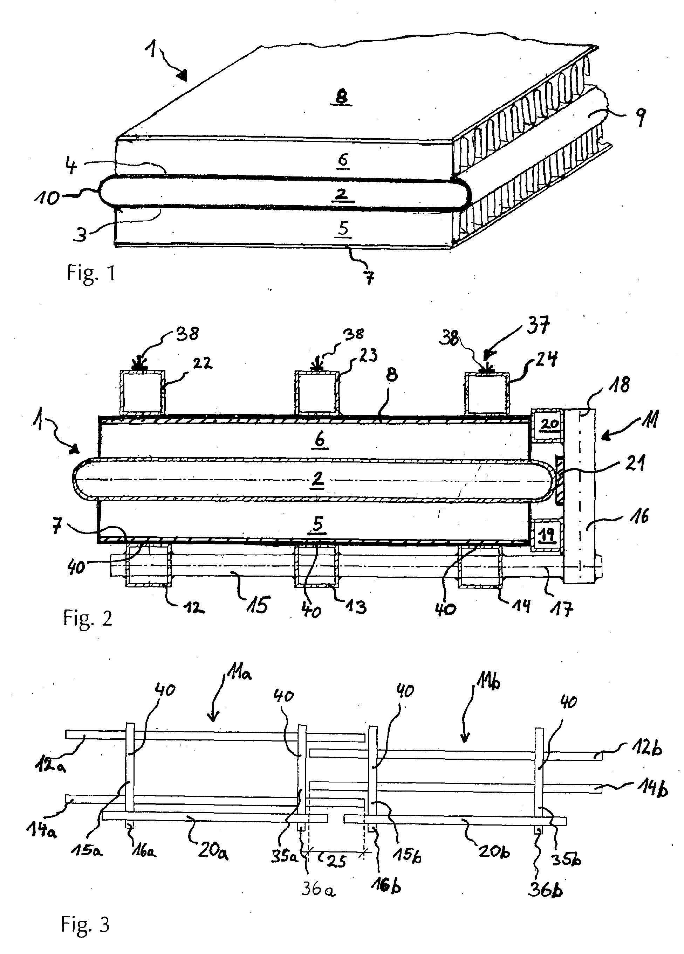

In den Figuren sind gleiche Bauteile mit gleichen Bezugszeichen versehen, wobei in der Fig. 3 das linke Lehrgerüst und dessen Bezugszeichen zur besseren Identifikation mit einem kleinen "a" und die entsprechenden Bezugszeichen des zweiten, rechts angeordneten Lehrgerüstes mit einem kleinen "b" versehen sind.

In der Fig. 1 ist ein Ausschnitt eines erfindungsgemäß hergestellten Wärmetauschers 1 in perspektivischer Ansicht gezeigt. Der Wärmetauscher 1 umfasst ein abgeflachtes, längliches Wärmetauscherrohr 2, unter dessen flacher Unterseite 3 ein erstes Rippenblech 5 und auf der flachen Oberseite 4 und ein zweites Rippenblech 6 aufgelötet sind. Auf den dem Rohr 2 abgewandten Seiten der wellenförmig gefalteten Rippenbleche 5 bzw. 6 ist ein erstes Abdeckblech 7 und ein zweites Abdeckblech 8 aufgelötet. Die Abdeckbleche 7 und 8 sind genauso breit wie die jeweiligen Rippenbleche 5 bzw. 6, wobei sich die Rippenbleche 5, 6 lediglich entlang der geraden, abgeflachten Wärmetauscherrohrseiten 3 und 4 erstrecken. Die rundlich ausgeformten Seitenbereiche 9, 10 des Wärmetauscherrohres 2 stehen in Querrichtung des Wärmetauschers 1 über die Rippenbleche 5, 6 und die Abdeckbleche 7, 8 seitlich über.

Der Wärmetauscher 1 ist in dem hier dargestellten Ausführungsbeispiel für den Einsatz in einem Kraftwerk konzipiert. Er hat eine größte seitliche Breite von 219 mm, eine größte Höhe von Abdeckblech 7 zu Abdeckblech 8 von 58,4 mm bei einer Blechstärke der Abdeckbleche 7, 8 von jeweils 0,5 mm und eine Gesamtlänge von rund 12 m. Das Wärmetauscherrohr 2 besteht aus einem außen mit Aluminium ummantelten Stahlrohr mit einer Wandungsstärke von 1,5 mm und einer Außenhöhe von 19 mm. Die Breite der abgeflachten Seiten 3 und 4 beträgt rund 196 mm, so dass die Rippenbleche 5, 6 ebenfalls 196 mm breit sind. Dies ergibt einen seitlichen Überstand der Rundseiten 9 und 10 des Wärmetauscherrohrs 2 von 11,5 mm.

In Fig. 2 ist ein Querschnitt durch einen in einem Lehrgerüst 11 angeordneten Wärmetauscher 1 gezeigt. Das Lehrgerüst 11 ist rund 1 m lang und umfasst, wie aus der Fig. 3 zu erkennen ist, grundsätzlich mindestens zwei Längsträger 12, 14 und zwei Querträger 15, 35 wobei die Querträger 15, 35 in Längsrichtung voneinander beabstandet und die Längsträger 12, 14 in Querrichtung des Wärmetauschers 2 von einander beabstandet sind. Im in der Fig. 2 gezeigten Ausführungsbeispiel weist das Lehrgerüst sogar drei parallel zueinander verlaufende Längsträger 12, 13, 14 auf, die mit einem Querträger 15 und einem dahinter liegenden und in dieser Figur nicht zu erkennenden Querträger 35 verbunden sind. Dabei durchdringt der Querträger 15 in diesem Ausführungsbeispiel mit einer kleineren Querschnittshöhe die Längsträger 12, 13, 14, so dass die Oberkanten der Längsträger 12, 13, 14 die vertikalen Anschläge 40 für die erste Abdeckplatte 7, also eine erste horizontale Anschlagebene, bilden.

Die in Fig. 2 und Fig. 3 dargestellten Lehrgerüste 11, 11a, 11b sind aus 1,5 mm starken Stahlprofilen zusammengeschweißt. Bei den in der Fig. 2 gezeigten Profilen handelt es sich um quadratische Hohlkastenprofile. Gemäß dem Ausführungsbeispiel der Fig. 2 und dem der Fig. 3 ist am rechten Ende der horizontal ausgerichteten Querträger 15, 35 jeweils ein nach oben weisender, senkrecht verlaufender, 80 mm hoher und 15 mm breiter Seitenholm 16, 36 angeschweißt. Die Schwereachse 17 des Querträgers 15 verläuft mit anderen Worten rechtwinklig zur vertikalen Schwereachse 18 des Seitenholms 16. An den Seitenholmen 16 bzw. 36 sind zwei übereinander angeordnete Anschlagrohre 19 und 20 parallel zu den Längsträgern 12, 13, 14 angeschweißt. Die Anschlagrohre 19 und 20 weisen dabei die gleiche Außenbreite auf, die der seitliche Rohrüberstand des runden Seitenbereiches 9 des Wärmetauscherrohres 2 aufweisen soll, wenn das Wärmetauscherrohr 2 seitlich an einem weiteren Anschlagblech 21 anliegt. Die vertikal verlaufenden Oberflächen der Anschlagrohre 20, 21 definieren daher die zweite vertikale Anschlagebene. Das Anschlagblech 21 ist zwischen den Anschlagrohren 19 und 20 ebenfalls seitlich an den Seitenholmen 16 und 36 angeschweißt. Es weist eine geringere Breite als die Anschläge 20, 21 auf, und definiert daher den seitlichen Überstand der runden Außenkante 9 des Wärmetauscherrohrs 2. Entlang der vertikal verlaufenden Oberfläche des Anschlags 21 verläuft also eine dritte, ebenfalls vertikal verlaufende Anschlagebene.

Um den Wärmetauscher 1 nun erfindungsgemäß herzustellen, werden in einem ersten Verfahrensschritt die erste Abdeckplatte 7 auf die Oberseiten der Längsträger 12, 13 und 14 gelegt und seitlich gegen das Anschlagrohr 19 geschoben. Die nach oben weisende Oberfläche des Abdeckbleches 7 wird mit einem Flussmittel bestrichen. Auf das erste Abdeckblech 7 wird dann das erste Rippenblech 5 gelegt und ebenfalls seitlich am Anschlag 19 ausgerichtet. Das Rippenblech 5 besteht aus Aluminium und ist wiederum mit einer Aluminium-Hartlot-Legierung (Al-Si), deren Schmelzpunkt unter dem der Hauptbauteile liegt, plattiert. Das heißt, dass sich die Aluminium-Hartlot-Legierung vollflächig als dünne Schicht auf dem Aluminium-Rippenblech erstreckt.

Wenn das Aluminium-Rippenblech 5 auf die Abdeckplatte 5 aufgelegt und ausgerichtet ist, wird das Wärmetauscherrohr 2 mit seiner abgeflachten Seite 3 auf das Rippenblech 5 gelegt, nachdem die zum Wärmetauscherrohr 2 gewandte Seite des Rippenbleches 5 ebenfalls mit einem Flussmittel bestrichen worden ist. Hierbei genügt es, nur die nach oben weisenden Kanten des wellenförmig gefalteten Rippenbleches 5 zum Beispiel mit einem Pinsel mit dem Flussmittel zu bestreichen.

Dann wird das Wärmetauscherrohr 2 auf das erste Rippenblech 5 gelegt und seitlich mit seiner runden Seite 9 am Anschlag 21 ausgerichtet. Auf die flache Oberseite 3 des Rohres 2 wird dann das ebenfalls mit Hartlot plattierte und gewellte zweite Rippenblech 6 aufgelegt, welches am oberen seitlichen Anschlagrohr 20 seitlich in seiner Lage justiert wird. Auf die Oberseite des abgeflachten Rohrbereiches 4 wird im Anschluss ein Flussmittel aufgebracht und danach das zweite Rippenblech 6 aufgelegt.

Das zweite Rippenblech 6 wird am seitlichen Anschlagrohr 21 in seiner seitlichen Positionierung ausgerichtet und zwar so, dass das Rippenblech 6 sich genau fluchtend vertikal über dem ersten Rippenblech 5 befindet. Die nach oben weisenden Kanten des zweiten Rippenbleches 6 werden dann mit einem Flussmittel bestrichen, bevor dann die zweite Abdeckplatte 8 auf das Rippenblech 6 gelegt wird. Die zweite Abdeckplatte 8 wird ebenso wie das zweite Rippenblech 6 am zweiten seitlichen Anschlagrohr 20 seitlich ausgerichtet. Auf die nach oben weisenden Oberseite des zweiten Abdeckbleches 8 werden dann im zweiten Verfahrensschritt einzelne Profile 22, 23 und 24 aufgelegt, die wiederum mittels Klappschrauben 38 an ihren Längsenden mit dem unten liegenden Längsträger 12, 13, 14 des Lehrgerüstes 11 verspannt werden. So entsteht ein sich selbst tragendes Paket 38, welches das Lehrgerüst 11, die Hauptbauteile 2, 5, 6, 7, 8 und die, die Konterprofile 22, 23, 23 umfassende, Kontervorrichtung 37 beinhaltet.

In Fig. 3 ist eine Draufsicht auf zwei sich in Längsrichtung überlappend aufgestellte Lehrgerüste 11a und 11b gezeigt. Beide Lehrgerüste weisen anders als das in Fig. 2 dargestellte Lehrgerüst 11 lediglich zwei Längsträger 12a, 12b und 14a und 14b auf, die in diesem Ausführungsbeispiel jeweils unter zwei parallel zueinander und rechtwinklig zu den Längsträgern verlaufende Querträger 15a, 35a bzw. 15b, 35b liegen. Hier sind also die nach oben weisenden Außenfläche der Querträger 15a, 35a die Anschläge 40. Die beiden Lehrgerüste 11a, 11b sind beides jeweils selbsttragende Konstruktionen. Dadurch ist es leicht möglich die Lehrgerüste 11a, 11b zu transportieren oder auszurichten. In Fig. 3 ist das erste Lehrgerüst 11 a aufgestellt worden, das zweite Lehrgerüst 11b hinter das erste Lehrgerüst 11 a verschoben und mit diesem in Längsrichtung fluchtend ausgerichtet worden.

Wesentlich ist nun, dass das Lehrgerüst 11b dabei in Längsrichtung überlappend mit dem Lehrgerüst 11a angeordnet ist. Insbesondere die Längsträger 12a, 14a und 12b, 14b befinden sich in Längsrichtung abschnittsweise nebeneinander. Der Abstand der Stirnseiten der Längsträger 12a, 14a zu denen der Träger 12b, 14b ergibt das Überlappungsmaß 25 der Lehrgerüste 11a, 11b. Dieses Überlappungsmaß wird so gewählt, dass es wenigstens genau dem sich beim Verlöten einstellenden Dehnungsunterschied zwischen der durchgehend auf den Stahl-Querträgern 15a, 35a und 15b, 35b liegenden Aluminium-Abdeckplatte 7 und dem Stahl-Längsträgern 12a, 14a bzw. 12b, 14b entspricht.

Dieser Dehnungsunterschied stellt sich aufgrund der unterschiedlichen Temperaturdehnungseigenschaften von Aluminium und Stahl ein. So dehnt sich die Aluminiumplatte beim Erhitzen stärker als die Stahlträger aus. Aufgrund der großen Länge der betreffenden Wärmetauscher 1 führt dieses Phänomen gerade in Längsrichtung zu ausgeprägten Dehnungsunterschieden. Damit der Wärmetauscher 1 auch während des Lötprozesses im Löttunnel durchgehend unterstützt ist und sich nicht verwindet, werden die Lehrgerüste 11a, 11b im kalten Montagezustand daher in Längsrichtung überlappend angeordnet. Sind die Wärmetauscher 1 dann im Löttunnel auf Löttemperatur erhitzt, ist die Überlappung der Gerüste 11a, 11b in diesem Moment verschwunden.

Um die hintereinander zu reihenden Lehrgestelle 11a, 11b überlappend anordnen zu können, sind die Längsträger 12a, 12b bzw. 14a, 14b zueinander in Querrichtung versetzt und die Anschlagrohre 20a und 20b entsprechend kürzer ausgeführt. Dies ermöglicht eine fluchtende durchgängige Anordnung der seitlichen Anschlagelemente 20a, 20b bei gleichzeitiger Überlappung der Längsträger 12a, 12b bzw. 14a, 14b der Lehrgerüste 11a, 11b.

Analog zu den Längsträgern 12a, 12b bzw. 14a, 14b der Lehrgerüste 11a, 11b werden die ebenfalls aus Stahlprofilen bestehenden Kontervorrichtungen 37 (nicht in Fig. 3 dargestellt) auf den Wärmetauscher 1, sich in Längsrichtung um das Überlappungsmaß 25 überschneidend angeordnet.

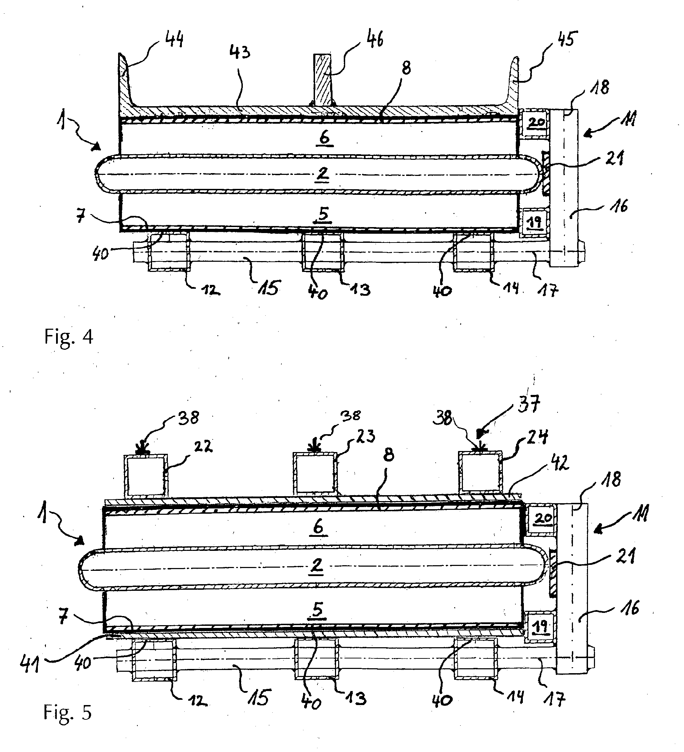

Der in Fig. 4 dargestellte Wärmetauscher 1 ist in ein Lehrgerüst 11 eingelegt, dass dem in Fig. 2 gezeigtem Ausführungsbeispiel entspricht. Allerdings wird der Wärmetauscher 1 hier durch ein zweites Ausführungsbeispiel einer Kontervorrichtung 37 eingespannt. Diese Kontervorrichtung 37 weist ein aus massivem Stahl bestehendes U-Profil 43 auf und ist mit der breiten Aussenseite des U-Profils 43 nach unten, flächig anliegend aber lose auf die Abdeckplatte 8 aufgelegt. Die Schenkel 44 und 45 weisen daher von der Abdeckplatte 8 nach oben weg. In der Mitte des U-Profils 43 ist ein ebenfalls aus massivem Stahl bestehender Balken als Zusatzgewicht 46 auf das Profil 43 aufgelegt.

Die Querschnittsform des U-Profils 43, die Position und die Querschnittsform des Zusatzgewichtes 46 sind rechnerisch derart ermittelt, dass sich ein bestimmter Gewichtskraftverlauf ergibt. Dieser ist so gewählt, dass sich unter dem Gewicht der Kontervorrichtung 37 eine ideale Verformung der Wärmetauscherbauteile beim Verlöten ergibt. Dabei kann sich das Zusatzgewicht 46 auch über die gesamte Breite des U-Profils 43 erstrecken. Im hier gezeigten Ausführungsbeispiel haben das U-Profil 43 und auch das Zusatzgewicht 46 die gleiche Länge wie der Wärmetauscher 1, wobei aber eine Stückelung in 1 m bis 2 m lange hintereinander beabstandet angeordnete Abschnitte besonders zur Reduzierung thermischer Verformungen in bereits oben beschriebener Wiese besonders vorteilhaft ist.

In dem in Fig. 5 gezeigten Ausführungsbeispiel eines erfindungsgemäßen Lehrgerüstes 11 weist dieses eine Lastverteilungsplatte 41 aus Stahl auf, die auf die Profile 12, 13, 14 geschweißt ist. Denkbar ist zwar auch eine lose aufliegende Lastverteilungsplatte 41, allerdings ist das Lehrgerüst 11 dann nicht so steif. Die Lastverteilungsplatte 41 ist hier gerade so breit wie die Abdeckplatte 7 des Wärmetauschers 1 und etwa so lang wie die Profile 12, 13, 14 abzüglich etwaiger Überlappungslängen 25. Auf der Lastverteilungsplatte 41 liegt der Wärmetauscher 1 flächig mit seiner Abdeckplatte 7 auf. Auf den Wärmetauscher 1 ist wiederum eine Kontervorrichtung 37 flächig aufgelegt. Dieses hier gezeigte Ausführungsbeispiel der Kontervorrichtung 37 entspricht im Wesentlichen dem des in Fig. 2 gezeigten Ausführungsbeispiels, nur dass auf die Abdeckplatte 8 des Wärmetauschers 1 eine Stahlplatte als Lastverteilungsplatte 42 und darauf wiederum die Profile 22, 23, 24 jeweils lose aufgelegt und mit den Spannmitteln 38 dann verspannt sind. Die Lastverteilungsplatten 41, 42 vergleichmäßigen in bereits beschriebener Art und Weise die Spannungseinleitung in den Wärmetauscher 1.

## Patentansprüche

1. Verfahren zur Herstellung eines Wärmetauschers (1), bei dem als Hauptbauteile ein abgeflachtes Wärmetauscherrohr (2), zwei Rippenbleche (5, 6) und zwei Abdeckbleche (7, 8) miteinander verlötet werden,
**dadurch gekennzeichnet**,
a) dass die Hauptbauteile (2, 5, 6, 7, 8) lose in ein Lehrgerüst (11) mit Anschlägen (19, 20, 21, 40) in der Reihenfolge erstes Abdeckblech (7), erstes Rippenblech (5), Wärmetauscherrohr (2), zweites Rippenblech (6), zweites Abdeckblech (8) eingelegt, dabei gegeneinander geschichtet und an den Anschlägen (19, 20, 21, 40) des Lehrgerüstes (11) in ihrer Einbauposition ausgerichtet werden, wobei eine mit einem Hartlot plattierte Oberfläche eines Bauteils mit einem Flussmittel beaufschlagt wird, wenn ein weiteres Bauteil gegen diese Oberfläche geschichtet wird;
b) dass die Hauptbauteile (2, 5, 6, 7, 8) mit dem Lehrgerüst (11) und einer, vorzugsweise aus einzelnen Profilen (22, 23, 24) bestehenden, Kontervorrichtung (37) gegeneinander und mit einer einstellbaren Spannkraft zu einem sich selbst tragenden Paket verspannt werden, wobei die Spannkraft so eingestellt wird, dass die zu verlötenden Hauptbauteile (2, 5, 6, 7, 8) bei einem Transport in ihrer Lage fixiert sind und zugleich zwei miteinander zu verlötende Hauptbauteile mit unterschiedlichen Wärmeausdehneigenschaften sich bis zu einer maximalen Löttemperatur in Querrichtung nicht unterschiedlich zueinander ausdehnen können.
c) dass das selbsttragende Paket den Löttunnel in Längsrichtung passiert, wobei die aneinander liegenden Hauptbauteile (2, 5, 6, 7, 8) zunächst vorgewärmt, dann auf Löttemperatur erhitzt und gleichzeitig miteinander an ihren Kontaktstellen mit der geschmolzenen Hartlotplattierung so verlötet werden, dass sich insbesondere entlang der Rippen (5, 6) durchgehende Lotnähte ausbilden.

2. Verfahren nach Anspruch 1,
**dadurch gekennzeichnet,**
**dass** die Hauptbauteile (2, 5, 6, 7, 8) in horizontaler Lage aufeinander geschichtet werden.

3. Verfahren nach Anspruch 1,
**dadurch gekennzeichnet,**
**dass** die Hauptbauteile (2, 5, 6, 7, 8) in einer in einem spitzen Winkel zur Vertikalen ausgerichteten Lage aneinander geschichtet werden.

4. Verfahren nach einem der vorhergehenden Ansprüche,
**dadurch gekennzeichnet,**
**dass** die Hauptbauteile (2, 5, 6, 7, 8) beim Verlöten in einer Stickstoffgasatmosphäre bis auf 605 °C aufgeheizt werden, wobei das Flussmittel zwischen 565 °C und 570 °C schmilzt und sich Lotnähte bei 577 °C bis 605 °C an den Kontaktstellen anliegender Hauptbauteile (2, 5, 6, 7, 8) bilden.

5. Vorrichtung zur Durchführung des Verfahrens nach einem der vorhergehenden Ansprüche,
**dadurch gekennzeichnet,**
**dass** zwei oder-mehr Lehrgerüste (11 a, 11 b) in Längsrichtung hintereinander und überlappend unter dem Wärmetauscher (1) angeordnet sind, wobei die Überlappung (25) der Lehrgerüste (11 a, 11 b) so eingestellt ist, dass sie wenigstens einem sich beim Verlöten in Längsrichtung einstellenden Temperaturdehnungsunterschied zwischen den Lehrgerüsten (11 a, 11 b) und dem darauf liegenden Hauptbauteil (7) entspricht.

6. Vorrichtung zur Durchführung des Verfahrens nach einem der vorhergehenden Ansprüche,
**dadurch gekennzeichnet,**
**dass** zwei oder mehr Kontervorrichtungen (37) in Längsrichtung hintereinander und überlappend am Wärmetauscher (1) angeordnet sind, wobei die Überlappung der Kontervorrichtungen (37) so eingestellt ist, dass sie wenigstens einem sich beim Verlöten in Längsrichtung einstellenden Temperaturdehnungsunterschied zwischen den Kontervorrichtungen (37) und der Abdeckplatte (7, 8) entspricht.

7. Vorrichtung zur Durchführung des Verfahrens nach einem der vorhergehenden Ansprüche,
**dadurch gekennzeichnet,**
**dass** das Lehrgerüst (11) wenigstens eine Lastverteilungsplatte (41) aufweist, die zwischen den Profilen (12, 13, 14) und der Abdeckplatte (7) des Wärmetauschers (1) zur Verteilung der Spannkraft angeordnet ist.

8. Vorrichtung zur Durchführung des Verfahrens nach einem der vorhergehenden Ansprüche,
**dadurch gekennzeichnet,**
**dass** die Kontervorrichtung (37) wenigstens eine Lastverteilungsplatte (42) aufweist, die zwischen den Profilen (22, 23, 24) und der Abdeckplatte (8) des Wärmetauschers (1) zur Verteilung der Spannkraft angeordnet ist.

9. Vorrichtung zur Durchführung des Verfahrens nach einem der vorhergehenden Ansprüche,
**dadurch gekennzeichnet,**
**dass** die Kontervorrichtung (37) zur Einspannung der Wärmetauscherbauteile (3, 4, 5, 6, 7, 8) ein massives U-Profil (43) aufweist, dessen Gewicht der Einspannung dient, wobei vorzugsweise zwischen den abstehenden Schenkel (44, 45) wenigstens ein, ebenfalls der Einspannung dienendes, Zusatzgewicht (46) angeordnet ist.
